**Europäisches Patentamt**

**European Patent Office**

**Office européen des brevets**

(19)

(11) Veröffentlichungsnummer: **0 127 141**

**A1**

(12) # EUROPÄISCHE PATENTANMELDUNG

(21) Anmeldenummer: **84105943.9**

(22) Anmeldetag: **24.05.84**

(51) Int. Cl.³: **B 60 R 9/04**

(30) Priorität: **26.05.83 DE 3319107**

(43) Veröffentlichungstag der Anmeldung:
**05.12.84 Patentblatt 84/49**

(84) Benannte Vertragsstaaten:
**AT BE CH DE FR GB IT LI LU NL SE**

(71) Anmelder: **Rumpp, Gerhard**
**Schornstrasse 2**
**D-8084 Inning/Ammersee(DE)**

(72) Erfinder: **Rumpp, Gerhard**
**Schornstrasse 2**
**D-8084 Inning/Ammersee(DE)**

(54) **Lasttrage- und Hebevorrichtung an Pkw.**

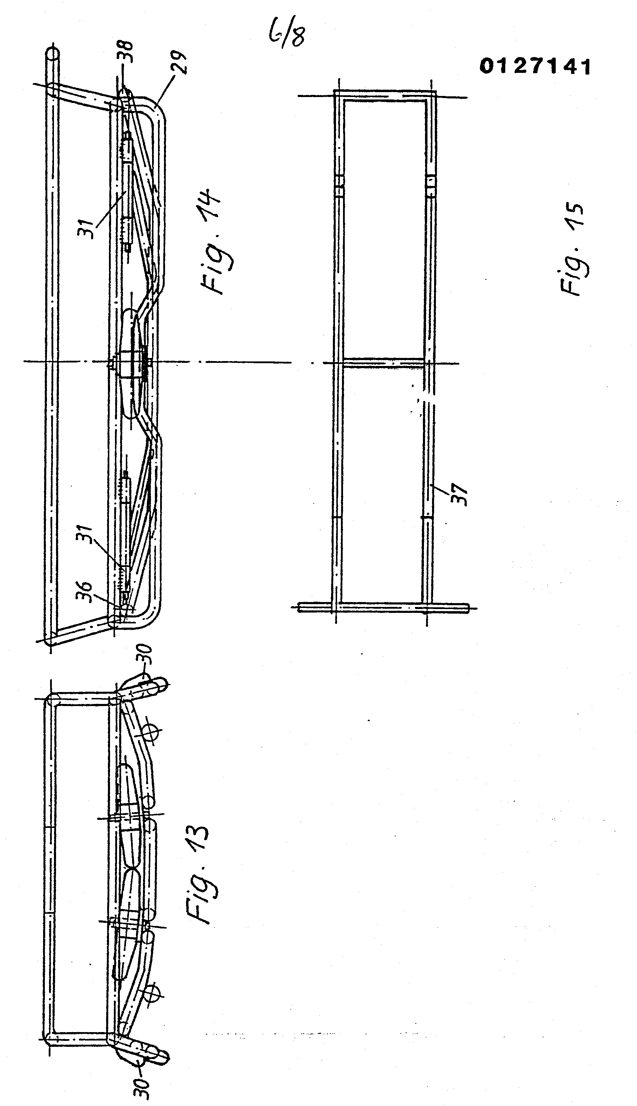

(57) Das Beladen von Dachgepäckträgern bereitet häufig Schwierigkeiten. Durch die Erfindung wird eine Lasttrage- und Hebevorrichtung geschaffen, die ein starr mit dem Fahrzeug verbundenes Traggestell (1, 5, 19), einen Schwenkrahmen (15, 15'; 16, 16') und einen daran angebrachten Lastrahmen (17) aufweist. Letzterer ist aus einer Stellung, wo er sich auf dem Dach abstützt, in eine bodennahe Stellung überführbar. Diese Überführung geschieht erfindungsgemäß durch Verschwenkung des Schwenkrahmens unter Erhalt der Parallelität des Lastrahmens zu sich selbst. Durch Ausbildung einer am Lastrahmen lösbar angebrachten Einrichtung als fahrbare Einrichtung (Figur 13 bis 17) wird das Problem des Transportes vom und zum Kfz gelöst und ein Umladen vermieden.

Fig.1

Stellung A

Stellung B

EP 0 127 141 A1

Gerhard Rumpp
Schornstraße 2

8084 Inning/Ammersee

---

Lasttrage- und Hebevorrichtung an Pkw

---

Die Erfindung betrifft eine Lasttrage- und Hebevorrichtung an
Personenkraftwagen, Wohnmobilen, Kleinbussen oder deren
Anhängern, mit einem starr mit dem Fahrzeug verbundenen
Traggestell, mindestens einem, um eine, zur Fahrtrichtung und
zur Vertikalen senkrechte, Achse, schwenkbaren Schwenkrahmen,
und einem am Schwenkrahmen angebrachten Lastrahmen, der durch
die Schwenkbewegung des Schwenkrahmens von einer ersten
Stellung, der Transportstellung, in der sich der Lastrahmen auf
dem Traggestell über dem Fahrzeug abstützt, in eine zumindest
Ladezwischenstellung überführbar ist, wobei der Lastrahmen in
eine zweite, bodennahe Stellung überführbar ist.

Zum Transport von zusätzlichen Gegenständen beim Reisen, beim
Sport und Camping, dienen in der Regel Dachgepäckträger, die
sich üblicherweise auf dem Fahrzeugdach abstützen. Mit diesen
können, bis zur zulässigen Dachlast, auch schwere Gegenstände,
wie Boote, Jollen, Fahrräder oder sonstige sperrige Gegenstände, aber auch Bierkästen, Werkzeugkästen oder dergl. von
Privatleuten transportiert werden. Dabei ist bei schweren
und/oder sperrigen Gegenständen und/oder hohen Dächern das Be-
und Entladen ein besonderes Problem, da geeignete Vorrichtungen wie Gabelstapler, dem in Rede stehenden Personenkreis bei den
genannten Tätigkeiten normalerweise nicht zur Verfügung stehen.

Aus der DE-OS 29 31 882 ist eine Lasttrage- und Hebevorrichtung
bekannt, mit deren Hilfe das Be- und Entladen eines
Dachgepäckträgers erleichtert werden kann. Bei dieser bekannten
Vorrichtung wird auf einem am Dach abgestützen Traggestell ein
Rahmen (dort: Kipprahmen) angelenkt, der abgeschwenkt werden
kann und der dann in Bodenrichtung verlängerbar ist, so daß ein
darauf befindlicher Lastrahmen auf dem Kipprahmen in eine
bodennahe Stellung verschieblich ist. Dann kann auf der so
gebildeten schiefen Ebene die Last leichter nach oben befördert
werden.

Soll der Kipprahmen aber nicht unvertretbar lang und damit
entweder für das Fahrzeug zu sperrig werden oder aber beim
Zusammenlegen erheblichen Aufwand erfordern, ergibt sich für
den Lastrahmen eine starke Schräglage, die das Auf- und Abladen
von Bierkästen, Werkzeugkästen oder dergl. wegen des
Herausfallens des Inhalts praktisch unmöglich macht. Ferner
müssen gerade schwere und/oder sperrige Gegenstände, deren
Aufladen eigentlich erleichtert werden soll, in die
entsprechende Schräglage verbracht werden, um später in gerader
Lage auf dem Fahrzeug ruhen zu können.

Der Erfindung liegt die Aufgabe zugrunde, Lasten von einer bodennahen Stellung, ohne daß ein Kippen des Lastrahmens in Kauf genommen werden muß, ohne Schwierigkeiten auf das Dach des Fahrzeugs
zu befördern und als Dachlast zu transportieren.

Dies wird erfindungsgemäß dadurch erreicht, daß der Lastrahmen
so an dem Schwenkrahmen angebracht ist, daß er durch die Verschwenkung des Schwenkrahmens im wesentlichen parallel zu sich
aus der Transportstellung in die bodennahe Stellung bewegt
wird.

Die erfindungsgemäße Lösung hat insbesondere folgende Vorteile:
Dadurch, daß der Lastrahmen so an dem Schwenkrahmen angebracht
ist, daß er durch die Verschwenkung des Schwenkrahmens im
wesentlichen parallel zu sich bewegt wird, und zwar durch eine
Bewegung und unter Erhalt der Parallel-ität bis in die bodennahe
Stellung, können auch Gegenstände, die nur unter Gefährdung
oder Schwierigkeiten in einer Schräglage transportiert werden
können, auf sichere Weise auf das Dach z.B. eines PKW geladen
werden.

Besonders bevorzugt stützt sich das Traggestell direkt am
Rahmen oder tragenden Teilen des Fahrzeugs ab. Dieses Merkmal
ist an sich aus der DE-OS 23 58 753 bekannt. Dadurch wird
einerseits eine Erhöhung der Gesamtlast möglich, andererseits
ist aber ggfs. auch eine günstigere Gewichtsverteilung beim
Auf- und Abladen möglich. Ferner ist es dadurch möglich, den
Schwenkrahmen bei der Verschwenkung seitlich besser
abzustützen.

Besonders bevorzugt sind zwei Schwenkrahmen vorgesehen, bei
denen je eine zur Schwenkachse senkrechte Stütze mit der Stütze
des anderen Schwenkrahmens und mit Teilen des Kraftfahrzeuges
einerseits und Teilen des Lastrahmens andererseits ein Gelenk-
Parallelogramm bilden.
Dies hat den Vorteil, daß, eine waagrechte Lage des Tragbodens
im Lastrahmen natürlich vorausgesetzt, bei einer Verschwenkung
die waagrechte Lage auf einfache Weise bei großer mechanischer
Stabilität der Gesamtanordnung aufrechterhalten werden kann.
Die Stützen sind dabei mit ihren unteren Enden besonders bevorzugt im hinteren, unteren Fahrzeugbereich angebracht, wo
einerseits der Rahmen oder tragende Teile, auf die sich die
Stützen abstützen können, vorhanden sind, und was andererseits
beim Abladen nach hinten, also über das Heck, wie es meistens
bevorzugt werden wird, eine günstige Bewegungskurve des
Lastrahmens ermöglicht. Das Abladen kann aber bei der Erfindung
z.B. auch über die Front des Fahrzeugs erfolgen.

Besonders bevorzugt sind die zwei Stützen in einer Ebene angebracht, wobei die in Abladerichtung gelegene Stütze um einen Betrag tiefer am Fahrzeug und am Lastrahmen angeordnet ist, der ein Übereinanderliegen der Stützen in der Abladestellung erlaubt. Abladerichtung ist die Richtung, in der, vom Fahrzeug aus gesehen, die Last nach dem Abladen zu liegen kommt, beim Abladen z.B. über das Heck also die Richtung entgegen der Fahrtrichtung.

Dadurch wird in der schmalen Endstellung des Parallelogramms ein Anschlag geschaffen, ohne daß eine Hebelwirkung der Kante der einen Stütze auf die andere auftritt. Der Abstand der Drehpunkte wird bei gleichstarken Stützen also eine Stützendicke betragen.

Besonders bevorzugt ist gemäß einem Merkmal von besonders eigenständiger Bedeutung mit dem Lastrahmen eine fahrbare, die Last aufnehmende Einrichtung lösbar verbunden. Im Regelfalle schließt der Transport der Last auch noch etwa einen Weg vom Park- zum Zeltplatz oder vom Haus zur Straße oder dergleichen ein. Bei den herkömmlichen Anordnungen ist vor dem Auf- und Abladen im engeren Sinne also noch ein Umladen erforderlich, das neben der Mühsal immer noch eine Gefährdung der Last mit sich bringt. Dem wird hierdurch abgeholfen.

Dabei ist besonders bevorzugt die fahrbare Einrichtung als Handwagen ausgebildet, der in der bodennahen Stellung aus dem Lastrahmen ausschiebbar ist.

Besonders bevorzugt ist die fahrbare Einrichtung mit zumindest in der bodennahen Stellung ausklappbaren Rädern versehen. Dadurch ist es möglich, in der Transportstellung die Gesamtanordnung nicht zu hoch über das Fahrzeugdach hinausragen zu lassen und die fahrbare Einrichtung in der bodennahen Stellung dennoch einfach und schnell in einen fahrbereiten Zustand zu versetzen.

Besonders bevorzugt sind die ausklappbaren Räder durch eine
Spanneinrichtung in der ausgeklappten Stellung fixierbar, und
sind am Lastrahmen Befestigungselemente vorgesehen, in die die
Spannvorrichtung zur Befestigung der fahrbaren Einrichtung an
dem Lastrahmen einrastbar ist. Alternativ bevorzugt ist die
fahrbare Einrichtung in der Transportstellung durch die
Befestigungselemente auch oder nur am Traggestell befestigbar.

Besonders bevorzugt weist die fahrbare Einrichtung einen Rahmen
aus rohrförmigen Elementen auf, und weist der Lastrahmen sich
in Fahrtrichtung erstreckende, nach oben offene U-Profile auf,
in die, sich in Längsrichtung erstreckende, Abschnitte des
rohrförmigen Rahmens in der bodennahen Stellung, zur Abstützung
der fahrbaren Einrichtung in der Transportstellung,
einschiebbar sind. Somit läßt sich die fahrbare Einrichtung
leicht durch ein paralles Verschieben vom Lastrahmen lösen.

In der bodennahen Stellung wird dabei vorzugsweise der Abstand
des Lastrahmens vom Boden so bemessen sein, daß beim Ausklappen
der Räder die fahrbare Einrichtung etwas angehoben wird und
dann vom Lastrahmen leicht durch Herausrollen lösbar ist.

Besonders bevorzugt ist der mindestens eine den Lastrahmen
bewegende Schwenkrahmen durch einen, vorzugsweise batteriebetreibbaren, Motor verschwenkbar. Damit lassen sich auch
schwerere Lasten einfach bewegen, und die Fahrzeugbatterie kann
zum Antrieb benutzt werden.

Bevorzugt ist bei der Erfindung eine, vorzugsweise motorgetriebene, Seilwinde, deren Seile den Schwenkrahmen
verschwenken, vorgesehen. Dies ermöglicht einen besonders
günstigen Ansatz der Kräfte an der zu verschwenkenden
Anordnung.

Besonders bevorzugt stützt sich das Traggestell am Fahrzeug über Stützrohre ab, die im wesentlichen senkrecht über Seiltrommeln der Seilwinde stehen und in denen die Seile geführt werden. Das ermöglicht eine Gesamtgewicht sparende Abstützung der Dachlast im Rahmen bzw. an den tragenden Teilen und ferner sind die Seile in den Tragrohren geschützt geführt, so daß sie sich nicht verheddern können und weitgehend reibungsfrei geführt werden können.

Insbesondere dabei werden besonders bevorzugt das oder die Seile je zwischen zwei horizontal im wesentlichen auf gleicher Höhe in einer zur Schwenkebene parallelen Ebene beabstandet angeordneten Seilrollen hindurchgeführt, und ist die Mitte zwischen den Seilrollen unterhalb des Scheitelpunktes der Schwenkkurve des Seilbefestigunspunktes angeordnet.

Dadurch wird das Seil bis zum Gipfel der Schwenkkurve durch die eine und ab dort durch die andere Rolle geführt. Der tote Punkt im Gipfel der Schwenkkurve wird zweckmäßig von Hand überwunden. Das Seil kann also bis zum Gipfel der Schwenkkurve die Last ziehen und ab dort das Ablassen durch Umschalten des Seilantriebs bremsen. Alternativ bevorzugt ist jedoch eine automatische Totpunktüberwindung mit Drehrichtungsumkehr vorgesehen.

Bevorzugt ist im Verlauf des Seils eine Lastanzeige eingebaut, die eine auf die maximal zulässige (Dach)last des Fahrzeugs einstellbare Markierung aufweist. Dadurch ist es schon beim Aufladen auf einfache Weise möglich, eine Überlastung des Fahrzeuges zu erkennen und dann noch rechtzeitig zu beheben.

Nachfolgend wird die Erfindung anhand bevorzugter Ausführungsformen unter Bezugnahme auf die beigefügten Zeichnungen, auf die wegen ihrer großen Klarheit und Übersichtlichkeit hinsichtlich der Offenbarung besonders verwiesen wird, noch näher erläutert.

Es zeigen:

Fig. 1: Eine Ausführungsform der Trage- und Hebevorrichtung der Erfindung in der Transportstellung und der bodennahen Stellung an einem geschlossenen Geländefahrzeug;

Fig. 2: Eine der der Fig. 1 ähnliche, modifizierte Ausführungsform an einem offenen Geländefahrzeug;

Fig. 3a bis c: Eine Ansicht bzw. Schnitte der Verbindungseinrichtung zweier Teile des Traggestells, mit den daran befestigten Seilrollen;

Fig. 4: Eine Seitenansicht der in den Schwenkrahmen enthaltenen Stützen, in beiden Endstellungen, wobei deren Befestigung am Fahrzeug und am Lastrahmen gezeigt ist und mit am Lastrahmen eingehängter fahrbarer Einrichtung;

Fig. 5: Eine Aufsicht auf die Stützen der Fig. 4 in bodennaher Stellung;

Fig. 6: Eine Ansicht der Drehbefestigung der Stützen an ihren Enden;

Fig. 7: Einen Schnitt an der Linie VII-VII in Fig. 6, in Pfeilrichtung gesehen;

Fig. 8: Einen Schnitt an der Linie VIII-VIII in Fig. 6, in
Pfeilrichtung gesehen;

Fig. 9: Einen Schnitt an der Linie a-b in Fig.4, zur
Erläuterung der Einhängung der fahrbaren Einrichtung
in dem Lastrahmen;

Fig. 10 : Ein Detail c aus Fig. 9, teilweise im Schnitt;

Fig. 11: Eine Rückansicht des Geländewagens aus Fig. 1;

Fig. 12: Einen Schnitt an der Linie XII-XII in Fig. 11;

Fig. 13: Eine Rückansicht eines erfindungsgemäßen Handwagens,
mit angeklappten Rädern und angeklappter Deichsel;

Fig. 14: Eine Seitenansicht des Handwagens aus Fig. 13, mit
angeklappten Rädern und angeklappter Deichsel;

Fig. 15: Eine Aufsicht auf die Deichsel des Handwagens aus
Fig. 13 und 14;

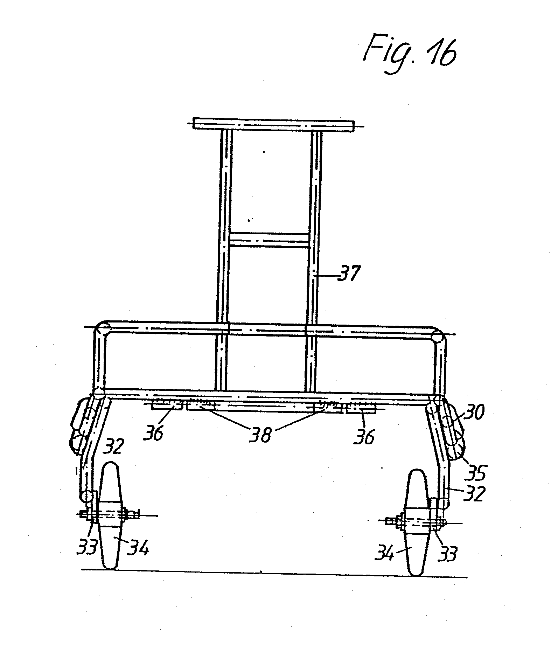

Fig. 16: Eine Vorderansicht des Handwagens aus Fig. 13 bis 15,
mit ausgeklappten Rädern und Deichsel;

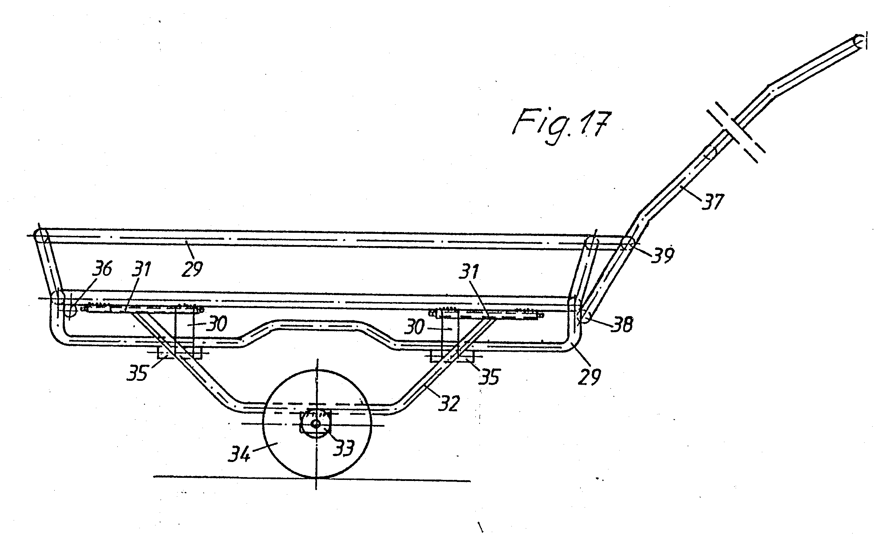

Fig. 17: Eine Seitenansicht des Handwagens aus Fig. 13 bis 15,
mit ausgeklappten Rädern und Deichsel.


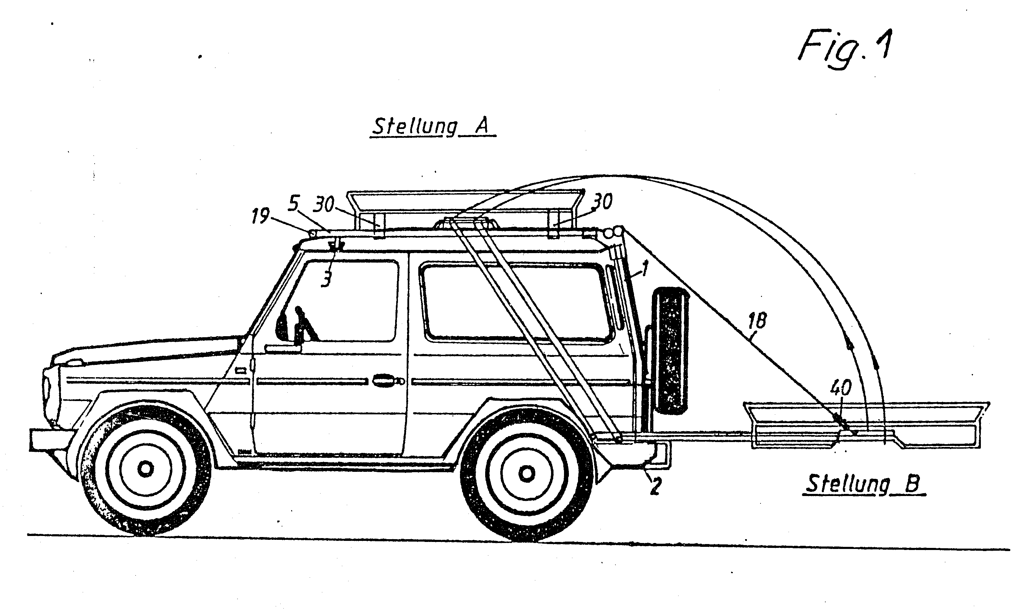

Die Erfindung ist in Fig. 1 am Beispiel eines geschlossenen,

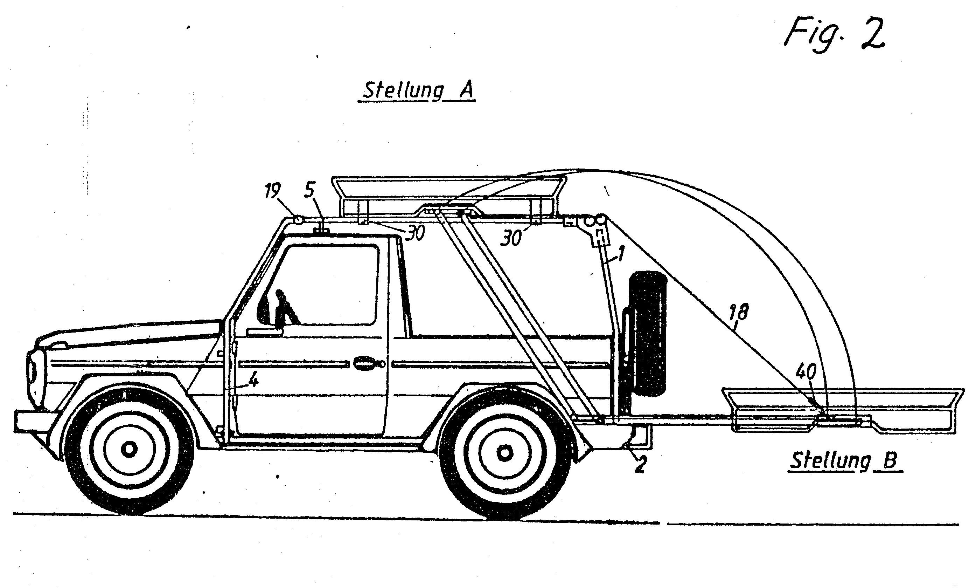

und in Fig. 2 am Beispiel eines offenen Kraftfahrzeuges
dargestellt. Hierbei ist jeweils sowohl die Position für die
Transport- oder Fahrstellung - Stellung A - wie die Position
Be- und Entladen (bodennahe Stellung) - Stellung B - dargestellt. In der Stellung B kann die als Handwagen ausgebildete
lösbare fahrbare Einrichtung (der "Dachständer" im engeren Sinne) - vgl. Fig. 13 bis 17 - ohne besondere Hilfsmittel aus
seiner sonst im Lastrahmen fixierten Position herausgefahren
werden.

Das fest mit dem Fahrzeug verbundene, im wesentlichen aus einem
Rohrgestänge 1, 5 gebildete Traggestell stützt sich in Fig. 1
auf dem festen Dach 3 des Kraftfahrzeuges und auf der Stoßstange 2, die ihrerseits fest mit dem Fahrzeugrahmen oder
tragenden Teilen des Kraftfahrzeuges verbunden ist, ab. Die in
Fahrtrichtung gesehen linken und rechten Gestängehälften des
Traggestells sind am Dachanfang und Dachende durch Querstreben
19 verbunden, die die Stabilität des Traggestells erhöhen.

Für einen offenen Wagen ist, wie in Fig. 2 gezeigt, das Traggestell 1, 5 nach vorne verlängert und stützt sich an der Stoßstange 2 und an den Seitenteilen 4 des Kraftfahrzeuges
unmittelbar vor den Einstiegstüren ab. Mit dieser Ausführungsform muß also in den Sommermonaten auch bei offener Fahrweise -
Klappverdeck heruntergenommen -  auf den Komfort des rationellen Transportes von Gütern nicht verzichtet werden.

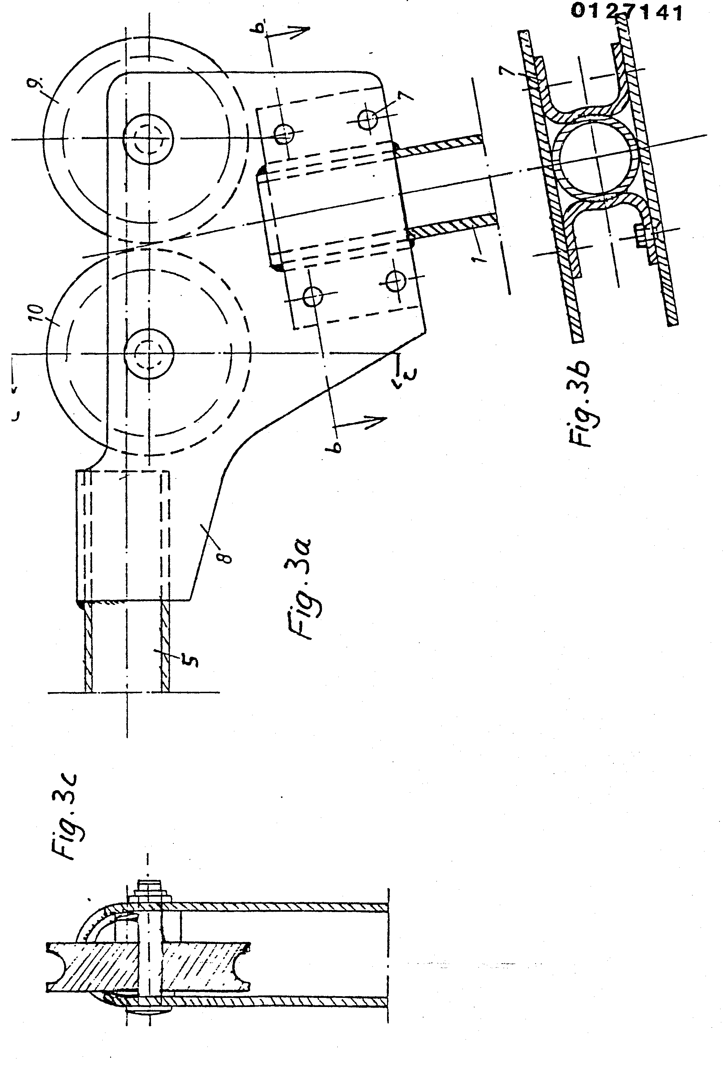

In Fig. 3 a bis c wird die Verbindung der Bestandteile 1 und 5
der Trageeinrichtung bzw. des Tragegestells gezeigt. Hierbei
werden die die Dachkonsole 5 des Tragegestells mit den die
senkrechte Abstützung hinten vermittelnden Teilen 1 über ein
Zwischenstück 8 verbunden, wobei die vorgesehene Schraubverbindung 7 eine Anpassung an verschieden schräge Heckausbildungen von verschiedenen Kraftfahrzeugen berücksichtigt.
In das Zwischenstück 8 eingebettet sind die Zugseil-Umlaufrollen 9, 10, wobei die Stellung der Seilrollen so gewählt
wird, daß das am Tragrahmen 17 angreifende Zugseil 18 in
Stellung A über die Rolle 10 und in Stellung B über die Rolle 9
läuft. Die Berührungsebene beider Rollen 9, 10 liegt genau über
der Mitte der im wesentlichen senkrechten Stütze 1 des Tragegestells, bzw. in Längsrichtung gesehen einseitig nach Außen versetzt, zur problemlosen Führung des Zugseiles 18 außerhalb des Handwagens entlang des Teils 5 der Trageeinrichtung.

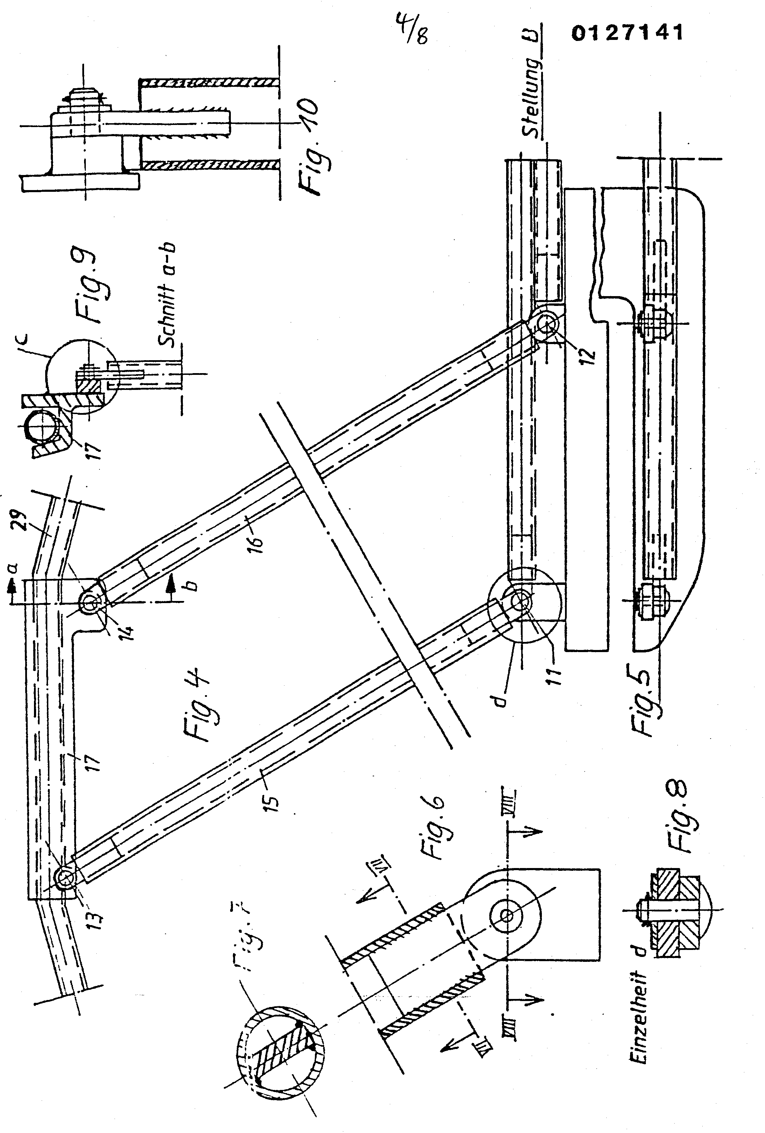

Der Erhalt der waagrechten Position des Lastrahmens 17 (Fig. 4) und damit des darin lösbar, aber starr befestigten Handwagens (Dachständers im engeren Sinne) bei der Überführung von Stellung A nach Stellung B wird durch eine Anlenkung von Bestandteilen der schwenkbaren Rahmenanordnung aus zwei Schwenkrahmen, nämlich der beiden Stützen 15 und 16 und der sie in der Schwenkebene verbindenen starren Teile (zwischen 13 und 14 in 17 und zwischen 11 und 12 am Fahrzeug) im Parallelogramm erreicht. Fig. 4 zeigt die Lagerstellen 11, 12 an der verlängerten Stoßstange des Kraftfahrzeuges und die Lagerstellen 13, 14 an dem Lastrahmen 17 des so gebildeten Kipprahmens. Es empfiehlt sich, wie in Fig. 4 gezeigt, die Drehachse der Lagerstelle 11 der vorderen, also bei Abladung nach hinten von der Abladerichtung entfernteren, Stütze 15 gegenüber der Drehachse der Lagerstelle 12 höher, im vorliegenden Fall um das Durchmessermaß der Stütze 16 höher, zu lagern, damit die Stützen 15, 16 in der Stellung B aufeinander liegen können. Die Lagerung des in Fig. 4 gezeigten Kipprahmens wird jedoch erfindungsgemäß immer so angeordnet sein, daß in Stellung B der als Handwagen ausgebildete Dachständer mit ausgeklapptem Fahrgestell am Boden aufsteht, bzw. genügend Freiraum zwischen dem als nach oben offene U-Schiene ausgebildeten Führungswinkel am Lastrahmen 17 und dem zugehörigen Rahmenteil 29 (hier ein Rohr) am Handwagen nach Fig. 13 bis 17 zum vereinfachten Herausfahren aus dem Lastrahmen besteht.

Die Seitenstreben des Tragrahmens 17 verlaufen außerhalb des Traggestells 1, 5, werden aber zumindest im Dachbereich durch dieses, 5, geführt, was durch die Stabilisierung des Traggestells durch die Querverstrebungen 19 erleichtert wird. Die Berührungsflächen sind vorzugsweise mit einer reibungsarmen Beschichtung versehen.

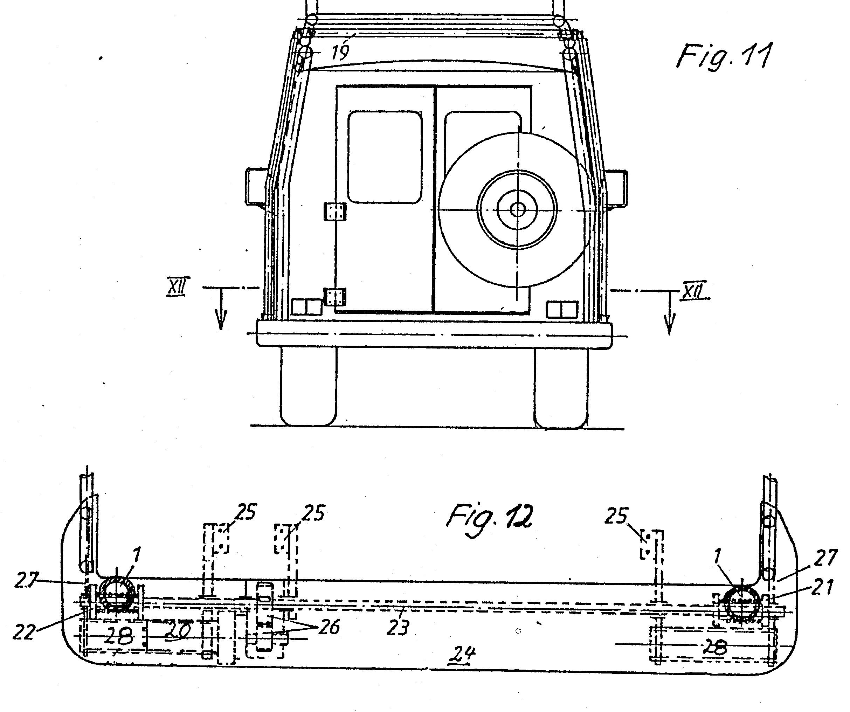

Das Herausfahren des Handwagens (Fig. 13 bis 17) aus dem
Führungswinkel des Kipprahmens 17 wird also dadurch gelöst, daß
wie in Fig. 9 (Schnitt A-B) gezeigt, der Führungswinkel als
offener U-Winkel ausgebildet ist. Dieser hat außerdem noch eine
Einlaufschräge, wie aus Fig. 9 ersichtlich, wobei die Öffnung
des U-Winkels den Abmessungen des Rohrrahmens 29 des Handwagens
angepaßt ist. Die Einlaufschräge erlaubt auch bei nicht ganz
genau senkrechter Anordnung des Rohrrahmens 29 über dem Kipprahmen 17 beim Einfahren in der bodennahen Stellung eine
sichere Aufnahme dieses Rohrrahmens. Der Rohrrahmen 29 ist
außerdem, wie aus Fig. 4 ersichtlich, vor und hinter einer der
Länge des U-Profils 17 entsprechenden Länge nach unten
abgewinkelt, um in aufgeladener Stellung eine Verschiebung des
Wagens in bzw. entgegengesetzt zur Fahrtrichtung zu vermeiden.

Um bei einseitiger Lastverteilung des Transportgutes auf dem
Handwagen dessen Abkippen aus seiner Position im Führungswinkel
zu vermeiden, sind entsprechende Befestigungselemente 30
zwischen dem Führungswinkel und dem Rohrrahmen 29 am
Dachständer vorgesehen. Nicht im Einzelnen dargestellt ist am
Lastrahmen die Befestigung des Zugseiles 18, das zunächst über
die Führungsrolle 10 den Lastrahmen 17 mit Handwagen aus der
Stellung A in die Scheitelstellung und von dort über die
Führungsrolle 9 in die Stellung B bringt. Zur Überwindung des
toten Punktes der Anordnung - Befestigungspunkt des Zugseiles
am Lastrahmen senkrecht über dem Stützrohr 1 - muß dieser von
Hand geführt werden, d.h., durch Umschalten der Zugrichtung des
Zugseiles 18 am Elektroantrieb 20 (Fig. 12) wird der Lastrahmen
über den toten Punkt in die Stellung B abgelassen, d.h. der
Elektroantrieb wird als Bremse zur Aufnahme der Schwerkraft der
Last eingesetzt.

In Fig. 4 ist in den Führungswinkeln des Lastrahmens 17 der
schwenkbaren Rahmenanordnung die als Handwagen nach Fig. 13 und
14 ausgebildete fahrbare Einrichtung in Transportstellung A gezeigt. Die Druckkräfte des Handwagens, auf dem wiederum das
zu transportierende Gut ruht, in Transportstellung A werden von
dessen Rohrrahmen 29 des Handwagens auf die U-Schiene des
Lastrahmens und von dort auf Traggestell 5, 1 der Trageanordnung übertragen. Dabei sind zur Sicherung des Handwagens
in der Transportstellung an den beiden Seiten des Handwagens je
zwei von Hand ohne Hilfswerkzeuge betätigbare Schnellspanner 30
vorgesehen.

Der Hebemechanismus nach Fig. 4 und Fig. 12 nach dem gezeigten
Ausführungsbeispiel der Erfindung wirkt beidseitig über Seiltrommeln 21, 22, die fest mit der Welle 23 verbunden sind,
wobei die Lagerung der Welle 23 in der verlängerten Stoßstange
24 in Längsstreben der Anschlußkonstruktion 25 erfolgt. Der
Antrieb der Welle 23 kann über verschiedene Antriebssysteme,
wie z.B. Hydraulikantrieb, Kardanwellenantrieb vom Motor des
Kraftfahrzeuges oder, wie am Beispiel in Fig. 12 gezeigt, durch
einen Elektroantrieb 20 erfolgen, der über das Zwischengetriebe
26 die Welle 23 kraftschlüssig antreibt. Die Erfindung ist
dabei nicht auf das gezeigte Ausführungsbeispiel in Fig. 12
beschränkt. Ein wesentliches Merkmal der Erfindung ist die Lage
der Seiltrommel 21, 22 zum Stützrohr 1 der Trageeinrichtung.
Zum Zwecke des sauberen Seileinlaufes und des Seilaufwickelns
aus dem Stützrohr 1 in die Seiltrommeln 21, 22 ist eine mittige
Anordnung des Stützrohres über den Seiltrommeln 21, 22 notwendig.

Zur Abstützung der Druckkräfte des beladenen Tragrahmens auf
die Drehpunkte 11, 12 der Gesamtanordnung sind besondere
Streben 27 in die Stoßstange 24 eingebettet, die über je ein
drehsteifes Rohr 28 mit der Anschlußkonstruktion 25 zum Fahrzeug verbunden sind. Die Strebe 27 dient gleichzeitig auch als
Lagerstelle für die Welle 23.

Der Rohrrahmen 29 des Handwagens (Fig. 13 bis 17) besteht aus Längs- und Querholmen, die so gestaltet sind, daß sämtliche bekannten Trageelemente wie Skihalter, Surfbretthalter, Trageroste, Tragebehälter, Kisten u. dgl. an diesem befestigt werden können.

Ein ganz besonderer Vorteil der erfindungsgemäßen Anordnung gegenüber den herkömmlichen liegt darin, daß am Rohrrahmen 29 des als Dachständer wirkenden Handwagens, wie in Fig. 13 bis 17 gezeigt, über die Drehachsen 31, das Fahrgestell 32 mit Anschlußplatte 33 und den Rädern 34 herausgeklappt werden kann. Zur Sicherung des Fahrgestelles 32 gegen einseitiges Einkippen ist vorgesehen, daß dieselben Schnellspanner 30, die zur sicheren Befestigung des Dachständers auf der Trageeinrichtung 5 vorgesehen sind, das Fahrgestell 32 über aufgeschweißte Rohrstücke (Halteeinrichtungen) 35 sicher spannen, damit dem Handwagen eine ausreichende Seitenstabilität gegeben ist.

Wie in Fig. 13 zu erkennen ist, neigen die beiden eingeklappten Fahrgestelle 32 in der Transportstellung A zum Herausfallen, d.h. eine Beschädigung des Autodaches/Wohnwagens, Anhängers, wäre unvermeidbar. Um diese Möglichkeit auszuschließen sieht die Erfindung wie in Fig.16 und 17 erkennbar, vor, daß die als Rahmen zur Handbedienung ausgeführte Deichsel (vgl. Fig. 15) 37 im Drehpunkt 38 drehbar gelagert ist und sie in Transportstellung A nach Fig. 13 und 14 hereingeklappt über einen Arretierstift 36 im Zentrum formschlüssig gehalten wird. In dieser Stellung der Deichsel 37 wird das Fahrgestell 32 des Handwagens zwangsläufig nach oben gehalten. Die ausgefahrene Position der Deichsel 37 wird in Fig. 16 und 17 gezeigt, wo ebenfalls über einen Arretierstift die Deichsel in einer Zentrierbohrung 39 des Rohrrahmens formschlüssig befestigt wird.

Es sind auch konstruktive Ausbildungen denkbar, wo die hier als Lastrahmen und fahrbare Einrichtung bezeichneten Elemente in einer Einrichtung verbunden sind.

Gerhard Rumpp
Schornstraße 2

8084 Inning/Ammersee

---

Lasttrage- und Hebevorrichtung an Pkw

---

P a t e n t a n s p r ü c h e

1. Lasttrage- und Hebevorrichtung an Personenkraftwagen, Wohnmobilen, Kleinbussen oder deren Anhängern, mit einem starr mit dem Fahrzeug verbundenen Traggestell (1, 5, 19), mindestens einem schwenkbaren Schwenkrahmen (15, 15'; 16, 16'), und einem am Schwenkrahmen angebrachten Lastrahmen (17), der durch die Schwenkbewegung des Schwenkrahmens von einer ersten Stellung (A), der Transportstellung, in der sich der Lastrahmen (17) auf dem Traggestell (5, 1, 19) über dem Fahrzeug abstützt, in eine zumindest Ladezwischenstellung überführbar ist, wobei der Lastrahmen in eine zweite, bodennahe Stellung (B) überführbar ist,

d a d u r c h   g e k e n n z e i c h n e t , daß zwei
Schwenkrahmen (15, 15'; 16, 16') vorgesehen sind, bei
denen je eine zur Schwenkachse senkrechte Stütze (15,
15') mit der Stütze (16, 16') des anderen Schwenkrahmens
und mit dem Rahmen oder  tragenden Teilen des Kraftfahrzeuges einerseits und Teilen des Lastrahmens andererseits
ein Gelenk-Parallelogramm bilden, wobei die Stützen mit
ihren unteren Enden am Rahmen oder tragenden Teilen im
hinteren unteren Fahrzeugbereich drehbar angeordnet sind
und der Lastrahmen (17) so durch die Verschwenkung der
Schwenkrahmen (15, 15'; 16, 16') im wesentlichen parallel
zu sich (17) aus der Transportstellung in die bodennahe
Stellung bewegbar ist.

2. Lasttrage- und Hebevorrichtung nach Anspruch 1, dadurch
gekennzeichnet, daß sich das Traggestell  (1, 5) direkt
am Rahmen (2) oder tragenden Teilen des Fahrzeugs und am
Dach abstützt.

3. Lasttrage- und Hebevorrichtung nach Anspruch 2, dadurch
gekennzeichnet, daß die zwei Stützen (15, 16; 15', 16') in
einer Ebene angebracht (11, 13; 12, 14) sind, wobei die in
Abladerichtung gelegene Stütze um einen Betrag (d) tiefer am
Fahrzeug und am Lastrahmen (17) angeordnet ist, der (d) ein
Übereinanderliegen der Stützen in der Abladestellung (B)
erlaubt.

4. Lasttrage- und Hebevorrichtung nach einem der Ansprüche
1 bis 3, dadurch gekennzeichnet, daß mit dem Lastrahmen (17)
eine fahrbare, die Last aufnehmende Einrichtung (Fig. 9;
Fig. 10) lösbar verbunden ist.

5. Lasttrage- und Hebevorrichtung nach Anspruch 4 , dadurch gekennzeichnet, daß die fahrbare Einrichtung als Handwagen (Fig. 13 bis 17) ausgebildet ist, der in der bodennahen Stellung (B) aus dem Lastrahmen (17) ausschiebbar ist.

6. Lasttrage- und Hebevorrichtung nach Anspruch 4, oder 5., dadurch gekennzeichnet, daß die fahrbare Einrichtung mit zumindest in der bodennahen Stellung ausklappbaren Rädern (34) versehen ist.

7. Lasttrage- und Hebevorrichtung nach Anspruch 5 und 6., dadurch gekennzeichnet, daß die ausklappbaren Räder (34) durch eine Spanneinrichtung (30) in der ausgeklappten Stellung (Fig. 16, Fig. 17) fixierbar sind, und daß am Lastrahmen Befestigungselemente vorgesehen sind, in die die Spanneinrichtung zur Befestigung der fahrbaren Einrichtung an dem Lastrahmen (17) einrastbar ist.

8. Lasttrage- und Hebevorrichtung nach einem der Ansprüche 6 oder 7, dadurch gekennzeichnet, daß die fahrbare Einrichtung eine um eine sich quer zur Fahrtrichtung erstreckende Achse (38) schwenkbare Deichsel (37) aufweist, und daß die Deichsel unter die fahrbare Einrichtung schwenkbar ist und in dieser Stellung die ausklappbaren Räder in der angeklappten Stellung fixiert (Fig. 13, Fig. 14).

9 . Lasttrage und Hebevorrichtung nach einem der Ansprüche 4 bis 8 , dadurch gekennzeichnet, daß die fahrbare Einrichtung einen Rahmen aus rohrförmigen Elementen aufweist, und daß der Lastrahmen (17) sich in Fahrtrichtung erstreckende, nach oben offene U-Profile aufweist, in die sich in Längsrichtung erstreckende Abschnitte des rohrförmigen Rahmens in der bodennahen Stellung, zur Abstützung der fahrbaren Einrichtung in der Transportstellung, einschiebbar sind.

10.. Lasttrage- und Hebevorrichtung nach einem der vorhergehenden Ansprüche, dadurch gekennzeichnet, daß der mindestens
eine den Lastrahmen (17) bewegende Schwenkrahmen (15, 16) durch
einen, vorzugsweise batteriebetreibbaren, Motor (20)
verschwenkbar ist.

11.. Lasttrage- und Hebevorrichtung nach einem der vorhergehenden Ansprüche, gekennzeichnet durch eine Seilwinde (21,
22, 23), deren Seile (18) den Schwenkrahmen (15, 15', 16, 16')
verschwenken.

12'. Lastrage- und Hebevorrichtung nach Anspruch 11, dadurch
gekennzeichnet, daß sich das Traggestell am Fahrzeug über
Stützrohre (1) abstützt, die im wesentlichen senkrecht über
Seiltrommeln (21, 22) der Seilwinde stehen und in denen die
Seile (18) geführt werden.

13. Lasttrage- und Hebevorrichtung nach Anspruch 11 oder 12,
dadurch gekennzeichnet, daß das oder die Seile (18) je zwischen
zwei horizontal im wesentlichen auf gleicher Höhe in einer zur
Schwenkebene parallelen Ebene beabstandet angeordneten
Seilrollen (9, 10) hindurchgeführt wird, und daß die Mitte
zwischen den Seilrollen unterhalb des Scheitelpunktes der
Schwenkkurve des Seilbefestigunspunktes angeordnet ist.

14. Lasttrage- und Hebevorrichtung nach einem der Ansprüche 11
bis 13, dadurch gekennzeichnet, daß im Verlauf des Seils (18)
eine Lastanzeige eingebaut ist, die eine auf die maximal
zulässige Dachlast des Fahrzeugs einstellbare Markierung
aufweist.

Fig.1

Stellung  A

19  5  30  30

3  1  18

40

2

Stellung  B

1/8

0127141

Fig. 2

Stellung A

Stellung B

Fig. 3c

Fig. 3a

Fig. 3b

5

8

10

9

b

b

c

c

1

7

7

3/8

0127141

Fig. 10

Fig. 9

Schnitt a-b

Fig. 4

Stellung B

Fig. 5

Fig. 6

Fig. 7

Fig. 8

Einzelheit d

17

29

17

14

16

15

13

12

11

d

a

b

c

Fig. 11

*19*

XII

XII

Fig. 12

*25*    *25*    *25*

*1*    *27*

*27*    *1*

*21*

*22*    *28*    *20*    *26*    *23*    *28*

*24*

0127141

Fig. 13

Fig. 14

Fig. 15

36  31  31  38  29

30  30

37

0127141

Fig. 16

Fig.17

0127141

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl ³) |
|---|---|---|---|
| X | US-A-2 492 841  (BURKEY) <br> * Spalte 3, Zeilen 14-66; Figur 5 * | 1,2 | B 60 R    9/04 |
| A | US-A-3 371 831  (SCHAEFFER) <br> * Spalte 3, Zeilen 31-71; Figur 2 * | 1 | |
| A | DE-A-3 102 863  (HARTMAN) <br> * Ansprüche 1-15 * | 4-6,8 | |
| A | US-A-3 999 673  (ANDERSON) <br> * Insgesamt * | 11 | |
| A | US-A-4 239 438  (EVERSON) | | |
| A | US-A-3 103 289  (CLARY) | | **RECHERCHIERTE SACHGEBIETE (Int. Cl. ³)** <br><br> B 60 R |
| A | POPULAR MECHANICS, Band 114, Nr. 1, Juli 1960, Seiten 138-141; "Bumper-mounted boat loader" <br> * Seite 139 * | | |

Der vorliegende Recherchenbericht wurde für alle Patentansprüche erstellt.

| Recherchenort | Abschlußdatum der Recherche | Prüfer |
|---|---|---|
| DEN HAAG | 03-09-1984 | SCHMITTER J.M. |